## Europäisches Patentamt
## European Patent Office
## Office européen des brevets

(19)

(11) Veröffentlichungsnummer: **0 024 281**
B1

(12)

# EUROPÄISCHE PATENTSCHRIFT

(45) Veröffentlichungstag der Patentschrift:
21.09.83

(51) Int. Cl.³: **C 10 J 3/48,** C 10 J 3/26,
C 10 J 3/78, C 10 J 3/86

(21) Anmeldenummer: 80102626.1

(22) Anmeldetag: 12.05.80

(54) **Vorrichtung zur Vergasung von feinkörniger Kohle.**

(30) Priorität: 21.08.79 DE 2933716

(43) Veröffentlichungstag der Anmeldung:
04.03.81 Patentblatt 81/9

(45) Bekanntmachung des Hinweises auf die Patenterteilung:
21.09.83 Patentblatt 83/38

(84) Benannte Vertragsstaaten:
AT BE DE FR GB IT LU NL SE

(56) Entgegenhaltungen:
CH-A-271 588
DE-A-1 596 323
DE-A-2 611 949
DE-B-1 063 314
FR-A-1 086 774
FR-A-2 187 678
FR-A-2 380 338
GB-A-789 587
US-A-3 988 123
US-A-3 998 609

(73) Patentinhaber: **Deutsche Babcock Aktiengesellschaft,**
**Duisburger Strasse 375, D-4200 Oberhausen 1 (DE)**

(72) Erfinder: **Rafael, Aruth, Albert-Einstein-Strasse 13,**
**D-4230 Wesel (DE)**

ACTORUM AG

## Vorrichtung zur Vergasung von feinkörniger Kohle

Die Erfindung betrifft eine Vorrichtung zur Vergasung von feinkörniger Kohle unter Druck in einem Reaktor, der Kühlrohre innerhalb einer feuerfesten Schicht aufweist und dessen Ausgang an einen Abhitzekessel zur Abkühlung des erzeugten Gases angeschlossen ist, wobei dieser Abhitzekessel aus einem Strahlungsteil und nachgeschalteten innerhalb eines Druckgefässes angeordneten Wärmetauscherflächen besteht.

Eine solche Vorrichtung ist aus der CH-A-271 588 bekannt. Bei dieser Vorrichtung bestehen die Wände des Vergasungsreaktors aus feuerfestem Mauerwerk, das durch Kühlrohre gekühlt ist. Die erzeugten Gase treten nach dem Verlassen des Vergasungsreaktors in von einem Kühlmantel umgebene Kühlräume ein. Diesen Kühlräumen ist ein Konvektionsteil nachgeschaltet, der als Rauchrohrkessel ausgebildet ist.

In der DE-A-1 596 323 ist ein Gaserzeuger beschrieben, der aus einem ungekühlten, feuerfest ausgekleideten Reaktionsraum besteht, dem ein gekühlter Nachbrennraum nachgeschaltet ist. An den Nachbrennraum schliesst sich ein zentraler, gekühlter Schacht an, der konzentrisch von zwei mit Berührungsheizflächen versehenen Gaszügen umgeben ist.

Aufgrund der in der Kohle vorhandenen Asche besteht bei derartigen Vorrichtungen die Gefahr, dass die Heizflächen des Abhitzekessels schnell verschmutzen. Durch diese Verschmutzung wird der Wärmeübergang und damit die Kühlung des Gases verschlechtert. Darüber hinaus kann in dem Rauchrohrkessel die Wärme der Gase nur bis zur Temperatur des im Rauchrohrkessel erzeugten Sattdampfes abgebaut werden. Das erzeugte Gas verlässt daher das Abhitzesystem mit einer verhältnismässig hohen Temperatur.

Der Erfindung liegt die Aufgabe zugrunde, eine Vorrichtung der eingangs genannten Art derart weiter zu entwickeln, dass die Anfahrzeiten und Abfahrzeiten verkürzt werden können, dass die Verschmutzung der Heizflächen vermindert wird, und dass die erzeugten Gase unter Ausnutzung ihrer Wärme weitgehend gekühlt werden können.

Diese Aufgabe wird ausgehend von einer Vorrichtung der eingangs genannten Art erfindungsgemäss dadurch gelöst, dass die Kühlrohre bestiftet und mit einer feuerfesten Masse bestampft sind, dass der Strahlungsteil Rohrwände aufweist, die aus durch zwischengelegte Stege gasdicht miteinander verschweissten Rohren gebildet sind und dass die nachgeschalteten Wärmetauscherflächen aus von dem erzeugten Gas umströmten Rohrbündeln von Berührungsheizflächen bestehen.

Gegenüber einem voll ausgemauerten Vergasungsreaktor ist die aufzuwärmende Masse des Reaktors bei der erfindungsgemässen Vorrichtung verhältnismässig klein. Der Reaktor ist daher beim An- und Abfahren sehr schnell verfügbar. Durch die Verwendung von Berührungsheizflächen im Anschluss an den Strahlungsteil kann die Gastemperatur unter Ausnutzung des Wärmeinhaltes der erzeugten Gases weitgehend gesenkt werden. Die Heizflächen des Strahlungsteiles sind so bemessen, dass die Asche in trockener Form anfällt. Diese feste Asche lässt sich in einfacher Weise aus dem Gas abtrennen. Eine Verschmutzung der Heizflächen, die den Wärmeübergang und damit die Kühlung des Gases beeinträchtigt, wird weitgehend vermieden. Der Strahlungsteil sorgt aufgrund seiner Ausbildung aus durch zwischengelegte Stege gasdicht miteinander verschweissten Rohren für eine intensive Kühlung der Gase. Diese Kühlung wird noch dadurch intensiviert, wenn der Strahlungskühler aus zwei von dem Gas hintereinander durchströmten Gaszügen besteht, die aus konzentrisch angeordneten Rohrwänden gebildet sind. Auf diese Weise kann auf im wesentlichen gleichem Raum die Heizfläche vergrössert werden.

Zwei Ausführungsbeispiele der Erfindung sind in der Zeichnung dargestellt und werden im folgenden näher beschrieben. Es zeigen:

Fig. 1 den Längsschnitt durch eine Vorrichtung gemäss der Erfindung und

Fig. 2 den Längsschnitt durch eine andere Ausführungsform der Erfindung.

Die dargestellte Vorrichtung dient zur Vergasung von feinkörniger Kohle unter einem Druck von 20–100 bar. Sie besteht aus einem zylindrischen Druckmantel 1, innerhalb dessen oberen Teil ein Vergasungsreaktor 2 angeordnet ist. Dem Vergasungsreaktor 2 wird in nicht dargestellter Weise feinkörniger Kohle in trockener Form oder in Form einer Kohlenstaub-Wasser-Suspension sowie ein Vergasungsmittel unter Druck zugeführt.

Die Wände des Vergasungsreaktors 2 sind durch Kühlrohre 3 gebildet. Die Kühlrohre 3 sind mit einer feuerfesten Masse 4 gestampft. Zur Halterung der feuerfesten Masse 4 auf den Kühlrohren 3 sind auf diese Stifte aufgeschweisst.

Die in dem Vergasungsreaktor 2 erzeugten Gase werden unmittelbar anschliessend in einem Abhitzekessel gekühlt. Der Strahlungsteil 5 des Abhitzekessels schliesst sich unmittelbar an den Ausgang des Vergasungsreaktors 2 an und ist ebenfalls innerhalb des Druckmantels 1 angeordnet. Der Strahlungsteil 5 weist Rohrwände 6 auf, deren Rohre durch zwischengelegte Stege gasdicht miteinander verschweisst sind.

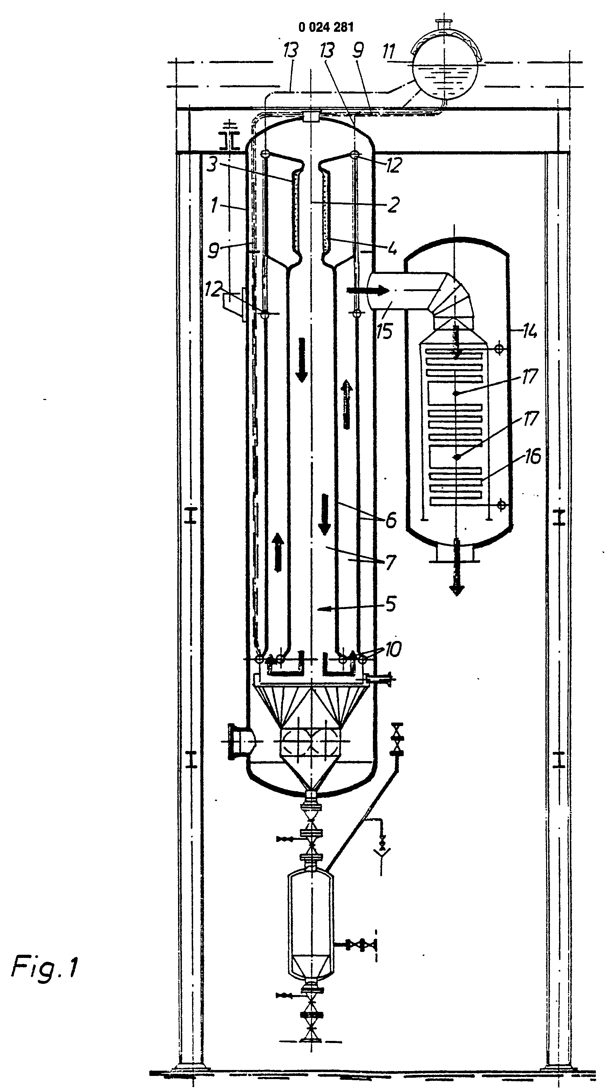

Bei der in Fig. 1 dargestellten Ausführungsform sind zwei Rohrwände 6 vorgesehen, die konzentrisch angeordnet sind. Auf diese Weise entstehen zwei Gaszüge 7, die von dem erzeugten Gas hintereinander durchströmt sind. Die Pfeile geben die Strömungsrichtung des Gases an. Hierbei wird auf verhältnismässig engem Raum das erzeugte Gas intensiv gekühlt. Durch diese intensive Kühlung kann die Temperatur des Gases am Ausgang des Strahlungsteiles 5 auf einen Wert gesenkt werden, der unterhalb der Sintertemperatur der Asche liegt.

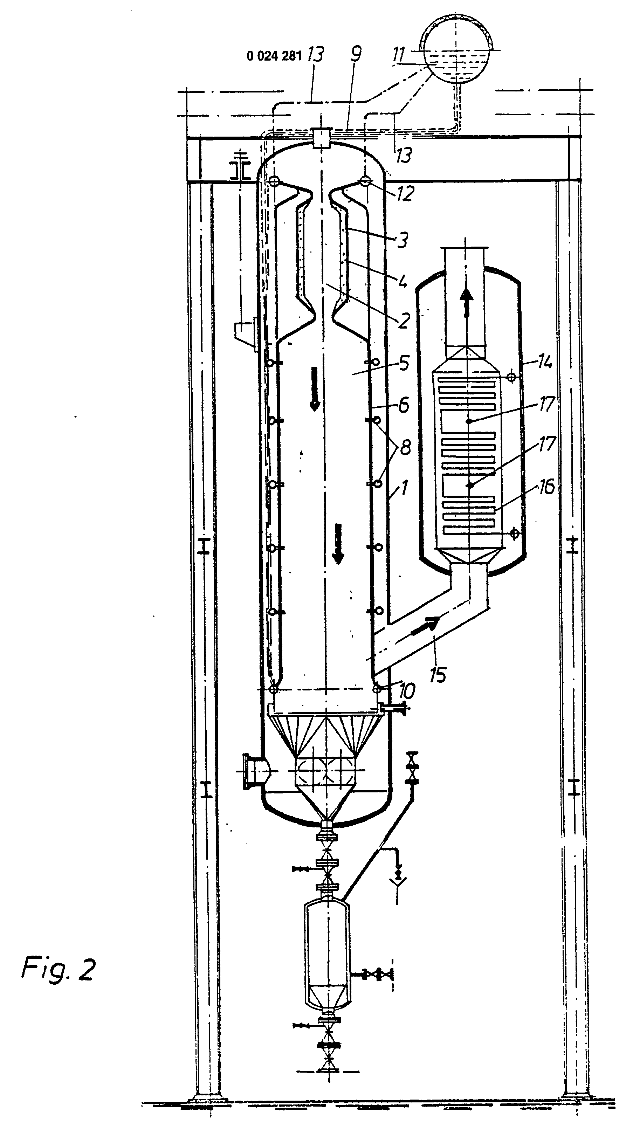

Nach Fig. 2 besteht der Strahlungsteil 5 aus einer einzigen zylindrischen Rohrwand 6. Um hier eine intensive Kühlung zu erzielen, sind in mehreren Ebenen ringförmig angeordnete Russbläser 8 vorgesehen. Mit Hilfe dieser ringförmig angeordneten Russbläser 8 wird die Innenseite der Rohrwand 6 von Verschmutzungen freigehalten. Es sind daher stets weitgehend saubere Heizflächen vorhanden, die einen guten Wärmeübergang gewährleisten. Durch den durch die Russbläser 8 eingeblasenen Dampf wird das erzeugte Gas in geringem Masse verdünnt. Ist eine solche Verdünnung unerwünscht, ist die in Fig. 1 dargestellte Ausführungsform vorzuziehen, die jedoch geringfügig höhere Investitionskosten erfordert.

Die Kühlrohre 3 des Vergasungsreaktors 2 und die Rohre der Rohrwände 6 werden über Fallleitungen 9 und untere Ringsammler 10 aus der Dampftrommel 11 des Abhitzesystems versorgt. Die oberen Ringsammler 12 der Kühlrohre 3 und der Rohrwände 6 sind über Steigleitungen 13 mit der Dampftrommel 11 verbunden.

Nach dem Austritt aus dem Strahlungsteil 5 werden die erzeugten Gase einem Druckgefäss 14 zugeführt, das über eine Rohrleitung 15 mit dem Inneren des Druckmantels 1 verbunden ist. Innerhalb des Druckgefässes 14 sind Berührungsheizflächen in Form von rechteckigen Rohrbündeln 16 angeordnet, die von dem erzeugten Gas von aussen umströmt sind. Im vorliegenden Fall sind die Rohrbündel 16 als Speisewasservorwärmer geschaltet. Die Rohrbündel 16 sind mit längsverschiebbaren Russbläsern 17 versehen.

Die im Strahlungsteil 5 des Abhitzekessels anfallende trockene Asche wird in Trichtern 18 aufgefangen, die innerhalb des Druckmantels 1 angeordnet sind. Über eine Druckschleuse 19 ausserhalb des Druckmantels 1 wird die Asche abgezogen.

**Patentansprüche**

1. Vorrichtung zum Vergasen von feinkörniger Kohle unter Druck in einem Reaktor (2), der Kühlrohre (3) innerhalb einer feuerfesten Schicht aufweist und dessen Ausgang an einen Abhitzekessel zur Abkühlung des erzeugten Gases angeschlossen ist, wobei dieser Abhitzekessel aus einem Strahlungsteil und nachgeschalteten innerhalb eines Druckgefässes angeordneten Wärmetauscherflächen besteht, dadurch gekennzeichnet, dass die Kühlrohre (3) bestiftet und mit einer feuerfesten Masse (4) bestampft sind, dass der Strahlungsteil (5) Rohrwände (6) aufweist, die aus durch zwischengelegte Stege gasdicht miteinander verschweissten Rohren gebildet sind und dass die nachgeschalteten Wärmetauscherflächen aus von dem erzeugten Gas umströmten Rohrbündeln (16) von Berührungsheizflächen bestehen.

2. Vorrichtung nach Anspruch 1, dadurch gekennzeichnet, dass der Strahlungsteil (5) aus zwei von dem Gas hintereinander durchströmten Gaszügen (7) besteht, die aus konzentrisch angeordneten Rohrwänden (6) gebildet sind.

3. Vorrichtung nach Anspruch 1, dadurch gekennzeichnet, dass die Heizflächen des Strahlungsteiles (5) mit ringförmig angeordneten Russbläsern (8) versehen sind.

**Claims**

1. Apparatus for the pressurized gasification of fine-grain coal in a reactor (2) which is provided with cooling tubes (3) within a refractory layer and whose outlet connects with a waste heat recovery boiler for cooling the gas produced, the said waste heat recovery boiler consisting of a radiant portion and of heat exchanger surfaces arranged downstream within a pressure vessel, wherein the cooling tubes (3) are studded and provided with a refractory ramming mix (4), the radiant portion (5) has tube walls (6) which are formed from tubes welded between each other in a gas tight manner by means of interposed flats and the heat exchanger surfaces arranged downstream consist of convection type tube banks (16) swept by the gas produced.

2. Apparatus according to claim 1, wherein the radiant portion (5) consists of two gas passes through which the gas flows successively and which are formed by concentrically arranged tube walls (6).

3. Apparatus according to claim 1, wherein the heating surfaces of the radiant portion (5) are provided with annularly arranged soot blowers (8).

**Revendications**

1. Dispositif pour la gazéification pressurisée de charbon à grain fin dans un réacteur (2) ayant des tubes de refroidissement (3) dans une couche réfractaire et dont la sortie est reliée à une chaudière de récupération pour le refroidissement des gaz produits, ladite chaudière de récupération comportant une partie à rayonnement et des surfaces d'échangeur de chaleur disposées en aval dans un réservoir à pression, caractérisé en ce que les tubes de refroidissement (3) sont studdés et pourvus de damé réfractaire, que la partie á rayonnement (5) possède des parois tubulaires (6) qui sont formées par des tubes soudés l'un à l'autre, de façon étanche aux gaz, moyennant des fers plats intercalés, et que les surfaces d'échangeur de chaleur disposées en aval sont formées par des nappes tubulaires constituant des surfaces de convection léchées par le gaz produit.

2. Dispositif selon la revendication 1, caractérisé en ce que la partie à rayonnement (5) consiste en deux parcours (7) traversés par le gaz successivement et formés par des parois tubulaires (6) en disposition concentrique.

3. Dispositif selon la revendication 1, caractérisé en ce que les surfaces de chauffe de la partie à rayonnement (5) sont pourvues de ramoneurs (8) en disposition annulaire.

0 024 281

Fig.1

Fig. 2

0 024 281